# EUROPÄISCHE PATENTSCHRIFT

(11) **EP 1 252 720 B1**
(45) Veröffentlichungstag und Bekanntmachung des Hinweises auf die Patenterteilung: **20.08.2003**
(21) Anmeldenummer: 01907374.1
(22) Anmeldetag: 17.01.2001
(51) Int. Cl.: H04B 1/38, H04Q 7/30

(54) **ARCHITEKTUR EINER BASISSTATION EINES FUNKKOMMUNIKATIONSSYSTEMS**
ARCHITECTURE OF A BASE STATION OF A RADIO COMMUNICATIONS SYSTEM
ARCHITECTURE DE STATION DE BASE D'UN SYSTEME DE RADIOCOMMUNICATION

(30) Priorität: 31.01.2000 DE 10004107
(43) Veröffentlichungstag der Anmeldung: 30.10.2002
(73) Patentinhaber: Siemens Aktiengesellschaft, 80506 München (DE)
(72) Erfinder: KLING, Helmut, 89275 Elchingen (DE)
(86) Internationale Anmeldenummer: DE0100186
(87) Internationale Veröffentlichungsnummer: WO01058030

(56) Entgegenhaltungen:
- EP-A- 0 690 641
- EP-A- 0 817 516
- US-A- 5 771 468
- PATENT ABSTRACTS OF JAPAN vol. 1998, no. 14, 31. Dezember 1998 (1998-12-31) & JP 10 248090 A (TSUSHIN HOSO KIKO;NEC CORP), 14. September 1998 (1998-09-14)

## Beschreibung

Die Erfindung betrifft die Architektur einer Basisstation eines Funkkommunikationssystems, insbesondere eines Mobil-Kommunikationssystems, wie sie beispielsweise bei einem Mobilfunksystem nach dem GSM-Standard verwendet wird.

Mobile Funkkommunikationssysteme basieren auf der Einteilung einer abzudeckenden Gesamtfläche in Funkzellen, wobei jede Funkzelle durch eine Basisstation, abgekürzt BTS (Base Transceiver Station), versorgt wird, d.h. die Basisstation versorgt und verwaltet die in ihrer Funkzelle befindlichen Mobilstationen. Idealisierend haben die Funkzellen eine sechseckige Form und überlappen sich, um einen Übergang einer Mobilstation in eine andere Funkzelle einer benachbarten Basisstation sicherzustellen. Im allgemeinen umfaßt eine Basisstation Sende- und Empfangsanlagen einschließlich der Antennen und einer für die Funkschnittstelle spezifischen Signalverarbeitung. Sie stellt das Gegenstück zur Mobilstation dar und stellt den Datenaustausch mit nachgeschalteten Netzelementen bis hin zur Vermittlungsstelle her.

Je nach Anwendung, beispielsweise abhängig von der Größe der zu versorgenden Funkzelle oder der Anzahl unterstützter Trägerfrequenzen, unterscheidet man Macro-Basisstationen - MacroBTS (Macro Base Transceiver Station)- und Micro-Basisstationen - MicroBTS (Micro Base Transceiver Station).

Diese beiden Formen einer Basisstation haben unterschiedliche Spezifikationen zu erfüllen, was sich unter anderem in ihrer äußeren Erscheinungsform widerspiegelt.

Einige wichtige Unterschiede zwischen einer Micro-Basisstation und einer Macro-Basisstation werden hier zusammenfassend dargestellt.

Eine Macro-Basisstation bearbeitet ein großes Verkehrsaufkommen in einer großen Funkzelle.
Typische Reichweiten einer Macro-Basisstation betragen 30 bis 50 km. Dadurch ist sie für große Ausgangsleistungen konzipiert und hat alle für eine Basisstation denkbaren technischen Anforderungen zu erfüllen.
Typische Ausgangsleistungen einer Macro-Basisstation betragen beispielsweise bis zu 50 Watt.
Um größere Verkehrsaufkommen bearbeiten zu können, verfügt sie typischerweise über 6 bis 24 Transceiver.

Typischerweise verfügt sie über einen Hybrid-Combiner, womit die einzelnen Trägerfrequenzen zusammengefaßt und als Summensignal auf eine Antenne gegeben werden, sowie über mehrere Überwachungsfunktionen, sogenannte Site-Alarms, die Teilfunktionen der Macro-Basisstation auf Störungen überwachen. Die Macro-Basisstation kann mit Hilfe von verschiedenen Einrichtungen ans Festnetz angebunden werden.

Durch ihre Konzeption wird die dafür benötigte Elektronik, Kühlung, Lüftung und Filterung sehr umfangreich und teuer. Für eine Macro-Basisstation wird typischerweise ein Volumen von mindestens mehreren hundert Litern benötigt.

Eine Micro-Basisstation wird bei speziellen Gegebenheiten, wie beispielsweise bei einer Versorgung von kleineren Funkzellen verwendet, für die ein Einsatz einer Macro-Basisstation zu aufwendig und zu teuer wäre. Oder sie wird beispielsweise eingesetzt, wenn nur ein begrenztes Raumvolumen zur Nutzung zur Verfügung steht.

Dabei kommt der Versorgung von kleinen Funkzellen eine immer größere Bedeutung zu, beispielsweise eine Indoor-Versorgung von Flughäfen, Kongresszentren und Hotels.
Durch den Einsatz von Micro-Basisstationen werden weiterhin durch Umgebung und Gelände bedingte, lokal begrenzte Versorgungsschwierigkeiten von Funkteilnehmern reduziert.

Eine Micro-Basisstation beinhaltet nur die für ihren speziellen Einsatz unbedingt notwendige Ausstattung.

So werden hier typischerweise die einzelnen Trägerfrequenzen nicht über einen Hybrid-Combiner zusammengefaßt, sondern einzeln auf verschiedene Antennen gegeben.
Die Überwachungsfunktionen, die sogenannten Site-Alarms, entfallen typischerweise. Weiter können sie typischerweise nur eingeschränkt mit Hilfe von verschiedenen Einrichtungen ans Festnetz angebunden werden.

Sie verfügt typischerweise über einen bis vier Transceiver TRX. Ihre relativ kleine Ausgangsleistung beträgt typischerweise ein Watt bis zu fünf Watt, die für eine Versorgung von kleinen Funkzellen ausreichend ist. Dadurch hat sie eine typische Reichweite von einigen hundert Metern bis hin zu einigen Kilometern.

Eine Micro-Basisstation ist dadurch mit einem minimalem Volumen von typischerweise weniger als hundert Litern realisierbar. Eine sehr kostengünstige Ausführung ist möglich.

Bei der Konzeption einer MicroBTS wird ein Ausgleich zwischen den widerstrebenden Forderungen nach minimalen Volumen auf der einen Seite und dem Wunsch nach der Implementierung möglichst vieler technischen Merkmale, wie sie einer MacroBTS entsprechen würden, auf der anderen Seite benötigt. Wirtschaftlich gesehen führt jedoch jede Einschränkung der technischen Möglichkeiten oder Volumenzunahme einer MicroBTS zu einer Beschränkung ihrer Marktchancen.

Der Erfindung liegt daher die Aufgabe zugrunde, eine MicroBTS zu schaffen, die einen optimalen Kompromiß zwischen Volumen und technischen Merkmalen darstellt.

Die Aufgabe wird durch die Merkmale des Anspruchs 1 gelöst. Bevorzugte Ausgestaltungen der Erfindung sind Gegenstand der Unteransprüche.

Eine erfindungsgemäße Basisstation eines mobilen Funkkommunikationssystems, die elektronische Baugruppen aufweist, ist modular nach einem Baukastenprinzip aufgebaut, und zwar weist sie eine Basiskonfiguration einer MicroBTS mit minimalen Volumen und mindestens ein Add-on-Modul auf, das mit der Basiskonfiguration verbunden ist. Diese Basiskonfiguration stellt daher eine Basisstation mit entsprechend eingeschränkten technischen Möglichkeiten, wie beispielsweise nur einer Trägerbaugruppe (sog. Carrier Unit), dar, ist jedoch als Basisstation betreibbar.

Vorzugsweise wird das zweite und jedes weitere Add-on-Modul mit dem vorhergehenden Add-on-Modul zu einer Basisstation mit den gewünschten technischen Eigenschaften verbunden.

Üblicherweise sind die elektronischen Baugruppen der Basiskonfiguration und des mindestens einen Add-on-Moduls auf einem Träger oder in einem entsprechenden elektrischen Chassis, im folgenden als Rack bezeichnet, angeordnet, wodurch die elektrische Versorgung sowie die Datenübertragung zwischen den Baugruppen bewirkt wird. Die Träger bzw. Racks sind so ausgelegt, daß sie sich durch eine entsprechende Gestaltung zu einem Gesamtträger bzw. Gesamt-Rack verbinden lassen. Dazu sind in einer bevorzugten Ausführungsform Verbindungselemente mechanischer und elektrischer Natur vorgesehen, die die Träspiele solcher Verbindungselemente sind geeignete Steckverbinder.

In einer bevorzugten Ausführungsform besitzt sowohl die Basiskonfiguration als auch das mindestens eine Add-on-Modul jeweils ein Gehäuse mit minimalem Volumen, wobei das erste Add-on-Modul derart an die Basiskonfiguration angeordnet ist, daß die beiden Gehäuse formschlüssig ein einziges Gesamtgehäuse bilden. Das zweite und jedes weitere Add-on-Modul wird entsprechend an das vorhergehende Add-on-Modul angefügt, so daß sich auf diese Weise ebenfalls ein Gesamtgehäuse ergibt.

Vorzugsweise wird das Gehäuse der Basiskonfiguration durch einen Grundrahmen und einen Deckel gebildet, der den Grundrahmen verschließt. Das Add-on-Modul weist einen Modulrahmen auf, d.h. ist an zwei Seiten offen. Dieser Modulrahmen bildet zusammen mit dem Grundrahmen formschlüssig einen Gesamt-Grundrahmen der Basisstation. Dabei sind Modulrahmen und Grundrahmen über Verbindungselemente fest aber lösbar miteinander verbunden. Gleiches gilt für die Verbindung zweier Modulrahmen, die ebenfalls so ausgestaltet sind, daß sie nach dem Zusammenfügen einen formschlüssigen Gesamtrahmen bilden.

Ferner kann der Grundrahmen einen integralen Boden, d.h. eine fest angeordnete Deckfläche aufweisen. Es ist jedoch auch möglich das der Grundrahmen der Basiskonfiguration aus einem Seitenrahmen sowie einem zweiten Deckel besteht, der die zweite als Boden bezeichnete Deckfläche verschließt. In diesem Fall ist es möglich, die Add-on-Module an zwei Seiten der Basiskonfiguration anzuordnen. Vorzugsweise hat der Grundrahmen und damit auch der Modulrahmen einen rechteckigen Querschnitt. Andere geometrische Formen sind möglich und richten sich nach dem Design oder den örtlichen Begebenheiten.

Im dem Fall, daß die Basiskonfiguration und die Add-on-Module Gehäuse aufweisen und diese in das Baukastenkonzept einbezoweisenden Träger bzw. Racks der einzelnen Module nur mittels elektrischer Verbinder, beispielsweise in Form von entsprechenden Flachbandkabeln, miteinander zu verbinden, um den Datentransport zwischen den Baugruppen zu bewirken.

Vorzugsweise verfügen die Basiskonfiguration und jedes Add-on-Modul über eine separate Temperierung und/oder Filterung.

Durch die Verwendung einer Basiskonfiguration einer MicroBTS mit minimalem Volumen und die Verlagerung bzw. Auslagerung zusätzlicher Funktionen in Add-on-Module, die der Basiskonfiguration zugefügt werden, wobei die Erweiterung der Basiskonfiguration bei ihrer Konzeption berücksichtigt wird, beispielsweise durch den Einsatz eines entsprechenden Bussystems und einem geeigneten Datenübertragungsprotokoll etc., wird ein Baukastensystem definiert, mit dessen Hilfe die verschiedensten Konfigurationen einer Basisstation gebildet werden können. Auf diese Weise wird erreicht, daß (nahezu) kein Merkmal einer MacroBTS ausgeschlossen werden muß, wobei die MicroBTS mit den verlangten oder gewünschten technischen Optionen volumenoptimiert ist. Von besonderem Vorteil ist es, daß nachträgliche Merkmale der MicroBTS zugefügt werden können, so daß eine zukünftige Aufwertung einer MicroBTS möglich ist.

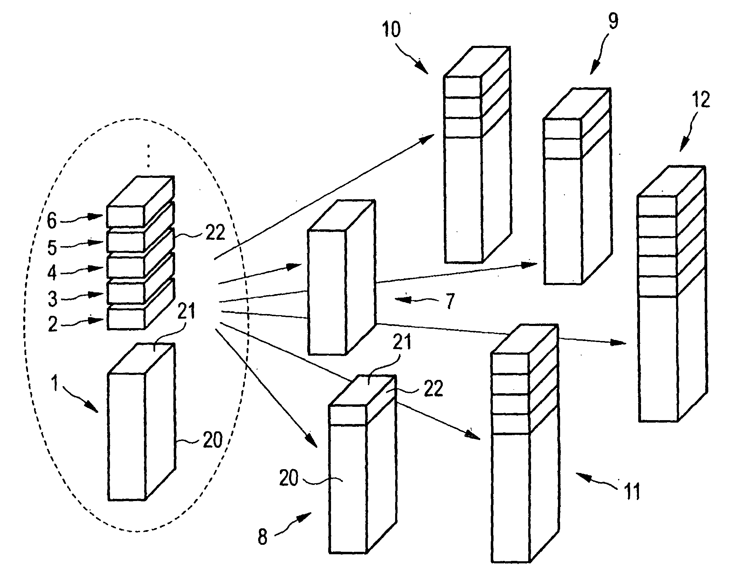

Eine bevorzugte Ausführungsform der Erfindung wird nachfolgend anhand der einzigen Figur erläutert.

Dargestellt ist in schematischer Weise eine von einem Gehäuse umschlossene Basiskonfiguration 1 einer Basisstation sowie darüber angeordnete Add-on-Module 2, 3, 4, 5 und 6. Der die Basiskonfiguration 1 und die darüber angeordneten Add-on-Module 2-6 umschließende Kreis soll verdeutlichen, daß es sich hier um ein Baukastensystem handelt und daß noch weitere Module zugefügt werden können. Je nachdem ob, und wenn ja, wieviele Add-on-Module mit der Basiskonfiguration 1 verbunden 10, 11 und 12. So umfaßt beispielsweise die Basisstation 7 nur die Basiskonfiguration 1, während die Basisstation aus der Basiskonfiguration 1 und einem Add-on-Modul 2 besteht. Der Aufbau der restlichen Basisstationen 8 - 12 ergibt sich aus der selbsterläuternden Figur. Wie weiter aus der schematischen Zeichnung hervorgeht, sind die Gehäuse so beschaffen, das nach dem Zusammenfügen der Basiskonfiguration 1 mit der entsprechenden Anzahl von Add-on-Modulen 2 - 6 unterschiedlicher Funktionalität sich ein gemeinsames Gehäuse ergibt. Dies geschieht beispielsweise, indem die Verkleidung oder das Gehäuse einer Basiskonfiguration aus mindestens zwei Teilen besteht, nämlich einem Deckel 21 und einem Grundrahmen 20. Nach Abnahme des Deckels 21 wird ein Add-on-Modul 2 - 6 oder mehrere Add-on-Module 2 - 6 montiert. Anschließend werden ein oder mehrere Modulrahmen 22 entsprechend der Anzahl der zusätzlichen Add-on-Module 2 - 6 dem Grundrahmen 20 zugefügt und der Deckel 21 wird oben wieder auf den obersten Modulrahmen angeordnet. Die Begriffe "oben" und "unten" entsprechen der Darstellung in der Figur und die Basisstation 7 - 12 wird bevorzugt stehend betrieben. Dies ist jedoch nicht zwingend und die räumliche Anordnung der Basisstation richtet sich nach deren Verwendung. Falls ferner die Modulrahmen 22 ein integraler Bestandteil der Add-on-Module 2 - 6 sind, wird die Montage und Erweiterung einer Basisstation weiter vereinfacht.

## Patentansprüche

1. Basisstation eines mobilen Funkkommunikationssystems mit elektronischen Baugruppen,
**dadurch gekennzeichnet,**
**daß** die Basisstation (7, 8, 9, 10, 11, 12) eine Basiskonfiguration (1) einer MicroBTS mit minimalen Volumen und mindestens ein Add-on-Modul (2, 3, 4, 5, 6) aufweist, das mit der Basiskonfiguration (1) verbunden ist,
**daß** die Basiskonfiguration (1) von einem Gehäuse (20, 21) umschlossen ist, das durch das Gehäuse des mindestens einen Add-on-Moduls (2, 3, 4, 5, 6) modular erweiterbar ist, wodurch ein Gehäuse mit minimalem Volumen der Basisstation gebildet wird,
**daß** die tragenden Racks der elektronischen Baugruppen der Basiskonfiguration (1) und des mindestens einen Add-on-Moduls (2, 3, 4, 5, 6) an den Verbindungsflächen so geformt sind, daß sie durch Verbindungselemente mechanischer und elektrischer Natur fest aber lösbar miteinander verbunden sind.

2. Basisstation nach Anspruch 1,
**dadurch gekennzeichnet, daß** das Gehäuse der
Basiskonfiguration (1) einen Grundrahmen (20) aufweist, der durch einen Modulranmen (22), der das mindestens eine Add-on-Modul (2, 3, 4, 5, 6) umschließt, modular erweiterbar ist.

3. Basisstation nach Anspruch 1 oder 2,
**dadurch gekennzeichnet, daß** das Gehäuse der Basiskonfiguration (1) einen Deckel aufweist, der den Deckel des Gehäuses der Basisstation (7, 8, 9, 10, 11, 12) bildet.

4. Basisstation nach Anspruch 2,
**dadurch gekennzeichnet, daß** das der Grundrahmen Modulrahmen (22) über Verbindungselemente fest aber lösbar miteinander verbunden sind.

5. Basisstation nach einem der vorangegangenen Ansprüche,
**dadurch gekennzeichnet, daß** die die elektronischen Baugruppen der Basiskonfiguration (1) und des Add-on-Moduls (2, 3, 4, 5, 6) tragenden Racks einen gleichen Querschnitt aufweisen und an den Verbindungsflächen so geformt sind, daß sie durch Verbindungselemente mechanischer und elektrischer Natur fest aber lösbar miteinander verbunden sind.

6. Basisstation nach Anspruch 1,
**dadurch gekennzeichnet, daß** die Racks über eine Steckverbindung verbunden sind.

7. Basisstation nach einem der vorangegangenen Ansprüche,
**dadurch gekennzeichnet, daß** die Basiskonfiguration (1) und jedes Add-on-Modul (2, 3, 4, 5, 6) eine separate Temperierung aufweisen.

## Claims

1. Base station for a radio communications system having electronic assemblies,
**characterized**
**in that** the base station (7, 8, 9, 10, 11, 12) has a basic configuration (1) of a MicroBTS with a minimal volume and at least one add-on module (2, 3, 4, 5, 6) which is connected to the basic configuration (1),
**in that** the basic configuration (1) is surrounded by a housing (20, 21) which can be extended in a modular manner by the housing of the at least one add-on module (2, 3, 4, 5, 6) thus forming a housing with a minimal volume of the base station,
**in that** the mounting racks for the electronic assemblies for the basic configuration (1) and for the at least one add-on module (2, 3, 4, 5, 6) are formed on the connecting surfaces such that they are firmly but detachably connected to one another by means of connecting elements of a mechanical and electrical nature.

2. The base station according to Claim 1,
**characterized in that** the housing for the basic configuration (1) has a base frame (20), which can be extended in a modular manner by means of a module frame (22) which surrounds the at least one add-on module (2, 3, 4, 5, 6).

3. Base station according to Claim 1 or 2,
**characterized in that** the housing for the basic configuration (1) has a cover, which forms the cover for the housing of the base station (7, 8, 9, 10, 11, 12).

4. Base station according to Claim 2,
**characterized in that** the base frame (20) and the at least one module frame (22) or two module frames (22) are connected to one another firmly but detachably via connecting elements.

5. Base station according to one of the preceding claims,
**characterized in that** the racks on which the electronic assemblies of the basic configuration (1) and of the add-on module (2, 3, 4, 5, 6) are mounted have the same cross section and their connecting surfaces are shaped such that they are firmly but detachably connected to one another by means of connecting elements of a mechanical and electrical nature.

6. Base station according to Claim 1,
**characterized in that** the racks are connected via a plug connection.

7. Base station according to one of the preceding claims,
**characterized in that** the basic configuration (1) and each add-on module (2, 3, 4, 5, 6) are subjected to heat separately.

## Revendications

1. Station de base d'un système de radiocommunication mobile équipé de modules électroniques,
**caractérisée en ce que**
la station de base (7, 8, 9, 10, 11, 12) comprend une configuration de base (1) d'une microBTS d'un volume minimal et au moins un module complémentaire (2, 3, 4, 5, 6), qui est relié à la configuration de base (1),
**en ce que** la configuration de base (1) est entourée d'un châssis (20, 21), qui peut faire l'objet d'une extension modulaire grâce au châssis de l'au moins un module complémentaire (2, 3, 4, 5, 6), ce qui permet de former un châssis d'un volume minimal de la station de base,
**en ce que** les baies porteuses des modules électroniques de la configuration de base (1) et de l'au moins un module complémentaire (2, 3, 4, 5, 6) sont formées aux surfaces de liaison, de telle sorte qu'elles sont solidarisées de manière fixe mais détachable par des éléments de liaison de nature mécanique et électrique.

2. Station de base selon la revendication 1,
**caractérisée en ce que** le châssis de la configuration de base (1) présente un cadre de base (20), qui peut faire l'objet d'une extension modulaire grâce à un cadre modulaire (22), qui entoure l'au moins un module complémentaire (2, 3, 4, 5, 6).

3. Station de base selon la revendication 1 ou 2,
**caractérisée en ce que** le châssis de la configuration de base (1) comprend un couvercle, qui constitue le couvercle du châssis de la station de base (7, 8, 9, 10, 11, 12).

4. Station de base selon la revendication 2,
**caractérisée en ce que** le cadre de base (20) et l'au moins un cadre modulaire (22) ou deux cadres modulaires (22) sont solidarisés de manière fixe mais détachable par l'intermédiaire d'éléments de liaison.

5. Station de base selon l'une des revendications précédentes, **caractérisée en ce que** les baies portant les modules électroniques de la configuration de base (1) et de la baie portant le module complémentaire (2, 3, 4, 5, 6) présentent une même section transversale et sont formés aux surfaces de liaison de sorte à être solidarisés de manière fixe mais détachable par des éléments de liaison de nature mécanique et électrique.

6. Station de base selon la revendication 1, **caractérisée en ce que** les baies sont reliées par un connecteur multibroches.

7. Station de base selon l'une des revendications précédentes, **caractérisée en ce que** la configuration de base (1) et chaque module complémentaire (2, 3, 4, 5, 6) présentent un système séparé d'équilibrage de la température.
